# EUROPÄISCHE PATENTANMELDUNG

(11) **EP 3 865 257 A1**
(43) Veröffentlichungstag der Anmeldung: **18.08.2021**
(21) Anmeldenummer: 21156327.5
(22) Anmeldetag: 10.02.2021
(51) Int. Cl.: B25J 9/16, G05B 19/418

(54) **EINRICHTUNG UND VERFAHREN ZUR ÜBERWACHUNG UND STEUERUNG EINES TECHNISCHEN ARBEITSSYSTEMS**

(30) Priorität: 11.02.2020 DE 102020103438
(71) Anmelder: Ingenieurbüro Hannweber GmbH, 01309 Dresden (DE)
(72) Erfinder: HANNWEBER, Helfried, 01237 Dresden (DE); PROBST, Sylvio, 01069 Dresden (DE); ALTMANN, Paul, 01069 Dresden (DE); ULLRICH, Markus, 01309 Dresden (DE); ROSENOW, Eric, 01139 Dresden (DE); GRAFE, Robert, 01728 Bannewitz OT Cunnersdorf (DE); HARTIG, Kay, 01309 Dresden (DE)
(74) Vertreter: Gottfried, Hans-Peter

(57) **Zusammenfassung**

Die Erfindung betrifft eine Einrichtung (1) und ein Verfahren zur Überwachung und Steuerung eines automatisiert arbeitenden technischen Arbeitssystems, das mit Menschen (8, 10) zusammenarbeitet. Das Arbeitssystem ist ausgebildet als ein wenigstens eine Arbeitsvorrichtung (2) und/oder wenigstens eine Signaleinrichtung (22) umfassender dreidimensionaler Entscheidungsraum (4). Der Entscheidungsraum (4) umfasst einen Kollaborationsraum (6), in dem das durch eine Steuerungseinrichtung (16) gesteuerte Arbeitssystem arbeitet. Eine Sensoranordnung (12, 14) ist vorgesehen, die den Entscheidungsraum (4) überwacht und dabei Sensordaten gewinnt. Nach der Erfindung umfasst die Steuerungseinrichtung (16) ein KI-System. Die Sensordaten werden an die Steuerungseinrichtung (16) übertragen und dort durch das KI-System gemeinsam mit einem digitalen Zwilling des technischen Arbeitssystems verarbeitet und verknüpft. Der digitale Zwilling ist an eine Datenbank angebunden, in der aus einer Vielzahl vergleichbarer technischer Arbeitssysteme gewonnene, für eine automatisierte Entscheidungsfindung relevante Informationen abgelegt sind. Aus der Steuerungseinrichtung werden Aktordaten ausgegeben und an die wenigstens eine Arbeitsvorrichtung (2) und/oder die wenigstens eine Signaleinrichtung (22) übertragen und in Aktionen umgesetzt. Weiterhin werden durch das KI-System Sensordaten und/oder Aktordaten, die für die automatisierte Entscheidungsfindung in vergleichbaren technischen Arbeitssystemen relevant sind, selektiert, an die Datenbank übertragen und dort abgelegt.

## Beschreibung

Die Erfindung betrifft eine Einrichtung und ein Verfahren zur Überwachung und Steuerung eines automatisiert arbeitenden technischen Arbeitssystems, das mit Menschen zusammenarbeitet, das Arbeitssystem ausgebildet als ein wenigstens eine Arbeitsvorrichtung und/oder wenigstens eine Signaleinrichtung umfassender dreidimensionaler Entscheidungsraum, der einen Kollaborationsraum umfasst, in dem das durch eine Steuerungseinrichtung gesteuerte Arbeitssystem arbeitet, wobei eine Sensoranordnung vorgesehen ist, die den Entscheidungsraum überwacht und dabei Sensordaten gewinnt. Die Erfindung betrifft damit die Erstellung eines automatisiert arbeitenden technischen Arbeitssystems, auch als integriertes Fertigungssystem bezeichnet, zur Planung, der Realisierung, dem Inverkehrbringen und dem Betrieb von Arbeitsvorrichtungen, vor allem komplexer automatisierter Maschinen und Anlagen, mit einem Fokus auf den Bereich Gesundheits- und Unfallschutz mit dem Schwerpunkt Sicherheit.

Das Inverkehrbringen im Sinne der nachfolgenden Ausführungen umfasst:
- erstmaliges Inverkehrbringen neu hergestellter Arbeitsvorrichtungen, Signaleinrichtungen oder Sensoranordnungen,
- erneutes Inverkehrbringen von Arbeitsvorrichtungen, Signaleinrichtungen oder Sensoranordnungen nach Umbauten und Änderungen, einschließlich "wesentlicher Veränderungen", die über eine erneute Inbetriebnahme nach Instandsetzung hinausreichen, und
- Inbetriebnahme nach komplexen Instandsetzungsarbeiten an Arbeitsvorrichtungen, Signaleinrichtungen oder Sensoranordnungen, ohne dass wesentliche Veränderungen vorgenommen wurden ("Retrofit")" und wobei die Veränderungen über eine einfache erneute Inbetriebnahme nach Instandsetzung hinausreichen.

Dem Entscheidungsraum werden alle wesentlichen Eigenschaften der Objekte und deren Beziehungen untereinander zugeschrieben. In dem dreidimensionalen, euklidischen Entscheidungsraum werden Punkte, Geraden und Ebenen definiert, für die bestimmte Aussagen zutreffen. Zur Auswertung von Bewegungen wird der Entscheidungsraum als euklidischer Vektorraum definiert. Beim diesem Vektorraum beziehen sich alle weiteren Angaben auf einen Nullpunkt. Dieses Bezugssystem hat ebenfalls eine Orientierung in Bezug zu übergeordneten Räumen. Die numerische Darstellung von Vektoren erfolgt in einem Koordinatensystem, das willkürlich gewählt werden kann. In diesem Koordinatenraum werden die Vektoren in einer Kombination aus reellen Zahlen r... = (x, y, z) dargestellt. Ein kartesisches Vektor-Koordinatensystem lässt sich in beliebige zylindrische oder kugelförmige Koordinatensysteme umrechnen, so dass die unterschiedlichen Koordinatensysteme anwendbar sind.

Der Kollaborationsraum ist der Teil des betrachteten Arbeitssystems, in dem die Arbeitsvorrichtung, z. B. ein Robotersystem, und Personen bzw. Menschen während des Produktionsbetriebs gleichzeitig Aufgaben ausführen können. Soweit nachfolgend beispielhaft auf Roboter als einer typischen Art der Arbeitsvorrichtung im Sinne der vorliegenden Erfindung Bezug genommen wird, gelten die hierzu getroffenen Aussagen für alle anderen Arbeitsvorrichtungen gleichermaßen.

Im Bereich der Robotik wird das mögliche Zusammentreffen mit Personen im gleichen Arbeitsraum durch die aktuelle Technische Regel DIN ISO /TS 15066:2017 "Kollaborierende Roboter" wie folgt definiert: "Ein kollaborierender Betrieb findet statt, wenn Menschen, z. B. Bedienpersonen in unmittelbarer Nähe des Robotersystems arbeiten können, während Energie an den Antriebselementen des Roboters ansteht, und es innerhalb des Kollaborationsraums zu einem physischen Kontakt zwischen einer Bedienperson und dem Robotersystem kommen kann."

Im Zuge des Fachkräftemangels, der Kostenreduzierung sowie der Optimierung von Prozessen und insbesondere manuellen Tätigkeiten, aber auch unter Aspekten zur Reduzierung monotoner und schwerer Arbeiten, steigt der Bedarf nach Automatisierung stetig. Durch die Individualisierung von Produkten oder Abläufen, die ein hohes Maß an Flexibilität erfordern, sind diesem Trend jedoch Grenzen gesetzt. Eine Möglichkeit, um weiteres Potential für die Automatisierung zu erschließen, ist daher die Mensch-Maschine-Kollaboration, also wenn Mensch und Maschine im gleichen Arbeitsraum zur selben Zeit zusammenarbeiten. Abstufungen hiervon, die vornehmlich im Bereich der Robotik Anwendung finden, sind je nach Definition zum Beispiel die Kooperation und Synchronisierung. Diese unterscheiden von der Kollaboration in ihrer zeitlichen und örtlichen Trennung der Arbeitsabläufe. Allen ist jedoch gemein, dass dem Aspekt der Sicherheit (Safety) eine wesentlich größere Bedeutung zukommt, da der Schutz vor gefahrbringenden Bewegungen durch die Arbeitsvorrichtung im Kollaborationsraum nicht mehr nur durch feststehend trennende Schutzeinrichtungen erfolgen kann.

Die maßgebende Forderung der technischen Sicherheit besteht aktuell darin, dass unter Zugrundelegung einer normativ festgelegten Annäherungsgeschwindigkeit für Personen von 1,6 m/s der Roboter zum Stillstand gekommen sein muss, wenn ihn die Person erreicht hat. Damit kann ein Unfall mit dem Roboter nicht verhindert werden. Es kann lediglich erreicht werden, dass ein Unfall nicht durch die Bewegung eines Roboters verursacht wird. Das gefährliche Zusammentreffen einer Person mit einem Roboter, der zu diesem Zeitpunkt unterschiedliche Achsstellungen eingenommen haben kann, wird mit den bestehenden Vorgaben nicht verhindert.

Unter Verweis auf geltende technische Normen im Hinblick auf den Sicherheitsabstand können transiente oder quasistatische Kräfte zugelassen werden, indem gefahrbringende Roboterbewegungen so weit reduziert werden, dass sie für den menschlichen Körper ungefährlich sind. Um das zur Optimierung von Schutzbereichen nutzen zu können, ist zurzeit keine geeignete Sensorik verfügbar, mit der bei flexiblen Situationen die Roboterbewegungen größerer Roboter ausreichend sicher beeinflusst werden können. Bereits verwendete Zusatzeinrichtungen an Robotern, wie z. B. eine taktile Schutzhaut oder andere Sensoren, die an den Roboterachsen angebracht werden, sind wegen des geringen Erfassungsabstands nur für kleine Bewegungsgeschwindigkeiten der Roboterachsen oder für kleine Kräfte einsetzbar, wie sie in der Regel nur durch Cobots (Roboter, die bereits für einen kollaborierenden Betrieb zertifiziert sind) sicher begrenzt werden können. Die Anwendung einer taktilen Schutzhaut in Bereichen mit weitergehenden, z. B. hygienischen Anforderungen, ist zudem nur eingeschränkt möglich.

Es ist bekannt und technisch möglich, notwendige Roboterbewegungen innerhalb eines Systems mit einer Software zu simulieren und nach Fertigstellung und Validierung der Systemplanung direkt in die jeweilige Robotersprache zu übernehmen. An einem Roboter muss damit keine zusätzliche Programmierung vorgenommen werden. Allerdings gibt es keine zertifizierte Sicherheitstechnik, mit der bei einem hohen Grad der Flexibilisierung für den Einsatz eines oder mehrerer Roboter in einem komplexen Raum umfassende Sicherheit gewährleistet werden kann. Flexible Schutzbereiche entlang der einzelnen Roboterachsen in Abhängigkeit von den jeweiligen Bewegungen des Roboters und der sich nähernden Personen sind noch nicht in die Praxis umgesetzt. Im Sinne einer Optimierung sollen damit Sicherheitsbereiche um die einzelnen Roboterachsen in Abhängigkeit von den Roboterbewegungen und den Achsgeschwindigkeiten dynamisch festgelegt werden.

Zertifizierung bedeutet im Sinne dieses Konzepts die verbindliche Bestätigung des Verantwortlichen für das Bereitstellen (Inverkehrbringen) einer technischen Anlage, Maschine oder allgemein eines Produkts, in dem Sinne, dass die geltenden technischen und gesetzlichen Vorschriften zum Gesundheits- und Unfallschutz bzw. des Umweltschutzes umfänglich eingehalten sind. Für neue Produkte, die im europäischen Wirtschaftsraum erstmalig in Verkehr gebracht werden, muss die Zertifizierung unter Beachtung der Vorgaben europäischer Richtlinien erfolgen. Außerhalb dieses Geltungsbereichs können auch bilateral vereinbarte nationale und/oder betriebliche Vorschriften oder einzelne technische Normen gelten. Es ist erforderlich, dass für das Inverkehrbringen von Produkten deren technische Sicherheit nach dem Stand der Technik nachgewiesen wird. In der Regel stehen dafür technische Normen zur Verfügung. Die Zertifizierung von Produkten, die keinen europäischen Richtlinien unterliegen und damit keine EG- oder EU-Konformitätserklärung erhalten müssen, kann einheitlich auf der Grundlage der internationalen Norm EN ISO/IEC 17050-1 erfolgen. Zu einer erneuten Inbetriebnahme bereits verwendeter Maschinen, z. B. nach einer Modernisierung (Retrofit), werden ebenfalls zutreffende technische Normen zu Grunde gelegt.

Derartige Systeme, die die oben umschriebenen Anforderungen teilweise umsetzen, sind aus dem Stand der Technik bekannt. Die Druckschrift DE 10 2017 010 718 A1 beschreibt ein Verfahren und Mittel zum Betreiben einer Roboteranordnung mit wenigstens einem Roboterarm, mit den Verfahrensschritten: Erfassen einer dreidimensionalen Umgebungskontur einer realen Umgebung der Roboteranordnung; Ermitteln eines Umgebungsmodells und/oder eines Freiraums für den Roboterarm auf Basis der erfassten Umgebungskontur und Betreiben der Roboteranordnung auf Basis des ermittelten Umgebungsmodells und/oder Freiraums. Optional erfolgen ein Identifizieren wenigstens eines roboterarmfesten Elements, insbesondere eines robotergeführten Werkzeugs und/oder des Roboterarms, in der erfassten Umgebungskontur und/oder Erfassen einer Stellung des Roboterarms, wobei das Umgebungsmodell und/oder der Freiraum auf Basis der Identifikation des roboterarmfesten Elements und/oder der erfassten Stellung ermittelt wird.

Es ist außerdem das Erfassen einer dreidimensionalen Feinkontur der realen Umgebung der Roboteranordnung nach dem Erfassen der Umgebungskontur vorgesehen, wobei die Feinkontur mit höherer Genauigkeit und/oder langsamer als die Umgebungskontur und/oder mithilfe wenigstens eines robotergeführten Sensors erfasst und die Roboteranordnung auf Basis der ermittelten Feinkontur betrieben wird. Insbesondere wird ein Umweltmodell und/oder ein Kollisionsraum für den Roboterarm ermittelt. Das Umgebungsmodell und/oder der Freiraum wird auf Basis von insbesondere unabhängig von a priori bekannten Objekten in der Umgebung des Roboterarms, vorgegebenen geometrischen Objekten, insbesondere Primitiven, auf Basis eines Arbeitsraums des Roboterarms und/oder auf Basis einer Verbindung und/oder Approximation erfasster Punkte in der Umgebung ermittelt.

Dabei wird die Umgebungskontur berührungslos, insbesondere optisch, und/oder mithilfe wenigstens eines Sensors, insbesondere eines 2D- oder 3D-Sensors, insbesondere einer 2D- oder 3D-Kamera, erfasst.

Aus der Druckschrift DE 10 2017 221 348 A1 ist eine Vorrichtung und ein Verfahren zur Ermittlung von Zeitdaten für ein Mensch-Roboter-Kooperations-System bekannt. Dabei wird eine Vorrichtung zur Planung eines Mensch-Roboter-Kooperations-(MRK)-Prozesses beschrieben, der durch ein MRK-System ausgeführt werden soll, das zumindest einen Roboter und zumindest einen Menschen umfasst. Die Vorrichtung ist eingerichtet, zumindest einen Prozessschritt zu ermitteln, der bei der Ausführung des MRK-Prozesses durch den Roboter ausgeführt werden soll. Die Vorrichtung ist ferner eingerichtet, Trajektorien-Information in Bezug auf eine vom Roboter für den Prozessschritt auszuführenden Trajektorie zu ermitteln. Die Vorrichtung kann auf Basis der Trajektorien-Information zumindest einen Kontaktbereich am Körper des Menschen ermitteln, den der Roboter bei der Ausführung des Prozessschrittes berühren könnte. Außerdem ist die Vorrichtung eingerichtet, in Abhängigkeit von dem ermittelten Kontaktbereich zumindest einen zulässigen Bewegungsparameter für den Roboter bei der Ausführung des Prozessschrittes zu ermitteln. Des Weiteren ist die Vorrichtung eingerichtet, auf Basis der Trajektorien-Information und auf Basis des zulässigen Bewegungsparameters Zeitdaten in Bezug auf eine Zeitdauer der Ausführung des Prozessschrittes zu ermitteln.

Die Druckschrift WO 2007/085330 A1 offenbart ein Verfahren und ein System zur Überwachung eines Arbeitsumfelds, das einen Roboter umfasst. Dazu werden wenigstens zwei Sicherheitsniveaus definiert. Es ist eine sichtbare Markierung vorgesehen, die einen potenziell gefährlichen Bereich in der Umgebung des Roboters kennzeichnet. Die Markierung weist mindestens ein Unterscheidungsmerkmal in Bezug auf andere Objekte in dem gefährlichen Bereich auf. Mindestens eine Kamera nimmt während des Betriebs des Roboters wiederholt Bilder des potentiell gefährlichen Bereichs einschließlich der Markierung auf. Eine Computereinheit empfängt die Bilder und erfasst Änderungen innerhalb der Markierung. Basierend auf den Bildern wird dann entschieden, ob die Sicherheitsstufe des Roboters wegen der erkannten Änderungen innerhalb der Markierung geändert werden soll.

Die Druckschrift WO 2008/014831 A2 hat ein Verfahren zur Beobachtung einer Person in einem industriellen Umfeld zum Gegenstand. Um eine verbesserte Gefahrenabsicherung im Kontext einer sicheren Mensch-Maschine-Interaktion zu ermöglichen, wird überwachten Raumbereichen, abhängig von der aktuellen Position und dem aktuellen Bewegungszustand einer Maschine oder eines Maschinenelementes sowie der beobachteten Person, ein orts- und zeitabhängiger variabler Gefährdungsgrad zugewiesen. Hierzu werden mittels eines Mehrkamerasystems Bilddaten der Person erfasst, um möglichst detaillierte Informationen über die Position und Ausrichtung der Person, insbesondere auch in Bezug auf deren Körperteile, in einem industriellen Umfeld zu erhalten. Diese Bilddaten werden sodann hinsichtlich der Abbildung einer Person untersucht, so dass dann, wenn eine Person in den Bilddaten detektiert wurde, dieser Personen-Hypothese ein artikuliertes, virtuelles 3D-Modell des menschlichen Körpers angepasst wird. Nachfolgend wird dieses virtuelle Körpermodell fortlaufend an das Bewegungsverhalten der in den Bilddaten detektierten Person angepasst. In Kenntnis der Position und des Bewegungsverhaltens des virtuellen Körpermodells im Raum wird ein Gefährdungspotential ermittelt. Das so ermittelte Gefährdungspotential wird einem Schwellwertvergleich unterzogen, um bei Überscheiten dieses Schwellwertes auf die Bewegungssteuerung der Maschine oder des Maschinenteils einzuwirken.

Der Stand der Technik bietet Lösungen für spezifische, lokale Probleme an, ohne jedoch eine allgemeine, auf unterschiedliche Systeme, von denen Gefahren ausgehen können, anwendbar zu sein. Zudem wird in einer grundsätzlich passiven Weise versucht, einer Gefahrensituation zu begegnen. Die bisher dafür verfügbaren Verfahren sind für hoch flexible Lösungen nicht verwendbar. Eine Flexibilisierung benötigter technischer Dokumentationen lässt sich mit den zurzeit bekannten Lösungen ebenfalls nicht realisieren. Mit den verfügbaren Steuerungssystemen, den Sicherheitssensoren und der gegebenen Eigensicherheit von Robotern ist die Realisierung flexibler Systeme im direkten Zusammenwirken mit Personen undenkbar. Zahlreiche normative Grundlagen, die heute weltweit unter Beachtung des Standes der Technik zum Nachweis der gesetzlich verlangten technischen Sicherheit anzuwenden sind, verhindern den Einsatz innovativer, flexibler Systeme.

Im praktischen Einsatz, insbesondere im industriellen Umfeld angewandte Lösungsansätze nutzen in der Regel verfügbare, berührungslos wirkende Schutzeinrichtungen, wie zum Beispiel Sicherheitslichtvorhänge oder Laserscanner. Mit steigender Komplexität und Flexibilität des Arbeitssystems werden jedoch die Umsetzung und die Beurteilung der Sicherheit erschwert und lassen bekannte Vorgehensweisen an ihre Grenzen stoßen. Dies führt dazu, dass die Beurteilung und die Umsetzung der Sicherheit auf einfache, statische oder wenige diskrete Zustände bzw. Abläufe reduziert werden, was die Flexibilität der Arbeitssysteme zunehmend einschränkt und innovative Lösungen verhindert. Eine proaktive, also vorausplanende Beeinflussung der Arbeitsvorrichtung oder Unterstützung des Menschen, beispielsweise durch eine entsprechende Signaleinrichtung, die der jeweiligen Situation dynamisch und bedarfsgerecht angepasst wird, findet nicht statt. Es fehlt an Einrichtungen und Verfahren, diese Lücke zu schließen. Insbesondere fehlen eine ganzheitliche Betrachtung und Einbeziehung der im gesamten Prozess der Entwicklung und Verwendung eines Arbeitssystems sowie dessen Beurteilung hinsichtlich der Sicherheit bzw. der erforderlichen sicherheitsrelevanten statischen und dynamischen Informationen, einschließlich für den Betrieb benötigter Dokumente und Normen.

Automatisierte Arbeitssysteme besitzen nach dem Stand der Technik zumeist auch Signalgeräte verschiedener Art. Dazu gehören einfache einfarbige Meldeleuchten, aber auch mehrfarbige Signalleuchten oder Signalsäulen. Mit den Signalgeräten werden dem Bediener die aktuelle Betriebsart bzw. definierte Zustände der Maschine oder einer anderen Arbeitsvorrichtung, wie zum Beispiel Fehlerfälle, signalisiert. Allen optischen Signalgeräten ist dabei gemein, dass das Licht ungerichtet in der unmittelbaren Umgebung der Maschine oder allgemein Arbeitsvorrichtung abgestrahlt wird. Ein proaktives, besonders auffälliges Anleuchten von Personen an deren Standort im Umfeld der Arbeitsvorrichtung, beispielsweise durch Ausrichten eines Lichtstrahles, insbesondere in Gefahrensituationen, findet nicht statt.

Aus der Bühnen- und Theaterbeleuchtung sind zwar sogenannte "Moving-Heads" und Follow-Spots bekannt, welche einen definierten Lichtkegel mit wenig Streulicht an eine Position aussenden und diese Position beleuchten. Die Moving-Heads verfügen dabei über eine Verstellung (Pan und Tilt) mittels Motoren. Die Bewegung folgt dabei einem festen Programmablauf oder werden durch einen Bediener gesteuert. Gleiches gilt für die Follow-Spots, welche durch den Anwender per Remotebedienung einer Person nachgeführt werden oder bei denen für eine automatische Nachführung die zu verfolgende Person spezielle Tracker bei sich tragen muss.

Weiterhin sind aus dem Automobilbereich Scheinwerfer in Matrixbauweise bekannt, welche in Kombination mit einer Kamera die Lichtverteilung so regeln können, dass entgegenkommende Fahrzeuge oder Personen am Fahrbahnrand gezielt aus dem Scheinwerferstrahl ausgeblendet werden können. Darüber hinaus ist eine Einrichtung bekannt, die mittels einer großen Zahl (in der Regel Millionen) von Mikrospiegeln die Lichtverteilung so einstellen kann, dass dem Fahrer oder anderen Verkehrsteilnehmern Symbole auf der Straße eingeblendet werden können.

Die aus dem Stand der Technik bekannten Lösungen für Automatisierungs- und Industrieanlagen haben den Nachteil, dass sie den Status von Maschinen bzw. deren Zustände und Gefährdungen nur statisch am Montageort der Meldeeinrichtung anzeigen und in Form eines ungerichteten Lichtes aussenden. Ein aktives Erfassen bzw. Tracking der Position eines oder mehrerer Bediener und eine bedarfsgerechte zielgerichtete Warnung in Gefahrensituationen oder die Anzeige von sich dynamisch ändernden Anlagenzuständen finden nicht statt. Insbesondere bei Anwendungen der Mensch-Roboter-Kooperation im kollaborativen oder synchronisierten (Bewegung nacheinander) Betrieb von Robotern, bei denen der Bediener wechselnde Arbeitspositionen einnimmt, an welchen lokal und dynamisch veränderlichen Maschinenzustände bzw. Betriebsarten und Gefährdungssituationen vorliegen, bedürfen einer bedarfsgerechten und lokalen Ausleuchtung zur Warnung des Bedieners oder Unterstützung seiner Tätigkeiten.

Die Notwendigkeit einer bedarfsgerechten und lokalen Ausleuchtung wird dadurch erhöht, dass in neuen innovativen Automatisierungslösungen, wie sie z. B. aus der Druckschrift DE 10 2017 218 183 A1 bekannt sind, und anderen Anlagenbestandteilen, wie fahrerlose Transportsysteme, über ihre eigenen (lokalen) optischen Zustandsanzeigen verfügen, welche sich gegenseitig überlagern und den Bediener verunsichern können.

Auch aus dem Stand der Technik allgemein bekannten Lösungen aus der Bühnen-, Theater- und Kraftfahrzeugtechnik, die auf passiver Aufhellung durch Anleuchten beruhen, werden diesen Anforderungen nicht gerecht. Darüber hinaus verfügt keine der genannten Lösungen über eine Funktionalität, welche die vorausschauende Warnung des Bedieners ermöglicht, bei der der Bediener bereits vor dem Eintreten einer Gefährdung und dem damit erforderlichen sicherheitsgerichteten Stillsetzen der Maschine gewarnt wird, so dass im Idealfall ein Abschalten und damit eine Prozessunterbrechung vermieden werden könnte.

Es ist daher Aufgabe der vorliegenden Erfindung, eine Einrichtung und ein Verfahren zur Überwachung und Steuerung, nachfolgend auch als Systemsteuerung bezeichnet, eines technischen Arbeitssystems anzubieten, das eine hohe Arbeitssicherheit und eine hohe technische Sicherheit gewährleistet.

Die Aufgabe wird gelöst durch eine Einrichtung zur Überwachung und Steuerung eines technischen Arbeitssystems, insbesondere eines integrierten Fertigungssystems, beispielsweise einer auf Roboter oder Cobot basierten Fertigung. Ein Cobot ist ein kollaborativer Roboter, der mit Menschen gemeinsam arbeitet und im Produktionsprozess nicht durch Schutzeinrichtungen von diesen getrennt ist. Ein solches integriertes Fertigungssystems kann eine Druckgussfertigungsanlage oder eine explosionsgefährdete Anlage sein. Das Arbeitssystem ist im Sinne der Erfindung ausgebildet als ein wenigstens eine Arbeitsvorrichtung, z. B. einen Roboter, insbesondere einen mobilen Roboter, dessen Geschwindigkeiten während seiner Verwendung permanent aktiv erfasst werden, eine explosionsgeschützte Anlage, und/oder wenigstens eine Signaleinrichtung umfassender dreidimensionaler Entscheidungsraum. Der Entscheidungsraum umfasst einen Kollaborationsraum, in dem ein durch eine Steuerungseinrichtung gesteuertes, automatisiert arbeitendes technisches System, insbesondere die Arbeitsvorrichtung, mit Menschen zusammenarbeitet, wobei eine Sensoranordnung vorgesehen ist, die den Entscheidungsraum überwacht und dabei Sensordaten gewinnt.

Nach der Erfindung umfasst die Steuerungseinrichtung ein KI-System, ein mit künstlicher Intelligenz ausgestattetes System. Künstliche Intelligenz (KI), auch artifizielle Intelligenz (AI bzw. A. I.), englisch artificial intelligence (AI bzw. A. I.) ist ein Teilgebiet der Informatik, das sich mit der Automatisierung intelligenten Verhaltens und dem maschinellen Lernen befasst. Meist bezeichnet künstliche Intelligenz den Versuch, bestimmte Entscheidungsstrukturen des Menschen nachzubilden, indem z. B. ein Computer so gebaut und programmiert wird, dass er relativ eigenständig Probleme bearbeiten kann.

Die Sensordaten werden an die Steuerungseinrichtung übertragen und dort durch das KI-System gemeinsam mit einem digitalen Zwilling des technischen Arbeitssystems bzw. des integrierten Fertigungssystems verarbeitet und verknüpft werden. Ein digitaler Zwilling ist eine digitale Repräsentanz eines materiellen oder immateriellen Objekts oder Prozesses aus der realen Welt in der digitalen Welt, ganz gleich ob das Gegenstück in der realen Welt bereits existiert oder zukünftig erst existieren wird. Digitale Zwillinge ermöglichen einen übergreifenden Datenaustausch. Sie sind mehr als reine Daten und bestehen aus Modellen des repräsentierten Objekts oder Prozesses und können daneben Simulationen, Algorithmen und Services enthalten, die Eigenschaften oder Verhalten des repräsentierten Objekts oder Prozesses beschreiben, beeinflussen, oder Dienste darüber anbieten. Der digitale Zwilling ist gemäß der vorliegenden Erfindung an eine Datenbank angebunden, in der aus einer Vielzahl vergleichbarer Arbeitssysteme, beispielsweise integrierte Fertigungssysteme (wobei auch darin enthaltene Arbeitsmittel umfasst sind), gewonnene, für eine automatisierte Entscheidungsfindung relevante Informationen abgelegt sind. Die Vergleichbarkeit der Arbeitssysteme bezieht sich auf die Funktionalität, insbesondere auf Sicherheitsfunktionen und Gefährdungen. Die Vergleichbarkeit ermöglicht es Querschlüsse zu ziehen, beispielsweise wegen ähnlicher verwendeter Arbeitsvorrichtungen; z. B. von Werkzeugmaschinen einerseits, die eine Vergleichbarkeit erwarten lassen, und in Abgrenzung dazu Gießmaschinen andererseits, bei denen eine Vergleichbarkeit mit den Einsatzbedingungen der Werkzeugmaschinen in der Regel nicht gegeben ist.

Aus der Steuerungseinrichtung werden Aktordaten ausgegeben und an die wenigstens eine Arbeitsvorrichtung und/oder die wenigstens eine Signaleinrichtung übertragen und in Aktionen umgesetzt. Weiterhin werden durch das KI-System Sensordaten und/oder Aktordaten, die für die automatisierte Entscheidungsfindung in vergleichbaren technischen Arbeitssystemen relevant sind, selektiert, an die mit dem digitalen Zwilling verknüpfte, bevorzugt übergeordnete Datenbank übertragen und dort abgelegt. Die Steuerungseinrichtung speichert mittels der Datenbank insbesondere relevante Vorgänge über einen festzulegenden Zeitraum, was zur Auswertung außergewöhnlicher Zustände, Beinaheunfällen oder Unfälle genutzt wird.

Unfälle können niemals völlig ausgeschlossen werden, weil für technische Systeme keine 100%ige Sicherheit herstellbar ist. Die Auswertung von Vorkommnissen kann aber für die Differenzierung zwischen technischen Fehlern und menschlichen Fehlverhalten genutzt werden und zu einem ständigen Verbesserungsprozess des Systems und der zugrundeliegenden Planung beitragen.

Das nachfolgend näher beschriebene System zum technisch sicheren bzw. regelkonformen Inverkehrbringen komplexer Maschinen und Anlagen begründet sich auf dem physikalischen Raum, dem alle relevanten Informationen zugeordnet werden und mit dessen Abbild, insbesondere einem digitalen Zwilling, alle relevanten Informationen verknüpft werden.

Der Entscheidungsraum lässt sich beliebig festlegen. Von den erforderlichen, eingetragenen Elementen, wie Arbeitsvorrichtungen, Signalvorrichtungen oder Sensoreinrichtungen, werden alle Eigenschaften erfasst, die für die Planung und die Relationen zu anderen Elementen im Entscheidungsraum von Bedeutung sind. Die im Entscheidungsraum erforderlichen Komponenten sind, neben der Maschinen- und Anlagentechnik, z. B. beliebige Teile eines Raums im Freien oder eines Gebäudes und des darin genutzten Raums, wie Wände, Decken, Träger, Fundamente, Wege, Treppen, Lagerflächen, Energieversorgungseinrichtungen. Es werden auch Sicherheits- und Hilfsausrüstungen, wie Beleuchtungs-, Be- und Entlüftungssysteme, relevante Umgebungsbedingungen, Fluchtwege, Brandlöscheinrichtungen, Explosionsschutz usw. berücksichtigt.

Den im Entscheidungsraum enthaltenen Komponenten können beliebige Eigenschaften zugeordnet und die notwendigen Angaben für die Relationen beschrieben und festgelegt werden, die auch für die Bestimmung der Schnittstellen wichtig sind, wie:
- räumliche,
- mathematische,
- zeitliche,
- funktionale,
- ablaufbedingende,
- physikalische,
- chemische,
- sicherheitsgerichtete,
- organisatorische und
- beschreibende Eigenschaften.

Damit werden von vornherein alle relevanten Informationen für die einzelnen Elemente und für deren Relationen erfasst und nicht, wie bisher, nur im Wesentlichen die funktionalen Aspekte berücksichtigt. Darüber hinaus werden nach der Erfindung insbesondere Aspekte der Sicherheit berücksichtigt, die durch die erfindungsgemäßen technischen Mittel realisiert werden.

Neben der Funktion und der Leistung des Systems werden damit vor allem von Anfang an die Anforderungen an die Sicherheit im Sinne des Gesundheits- und Unfallschutzes vorgegeben, sowie die Informationen, welche für die im Zuge des Inverkehrbringens erforderlichen Dokumentationen, insbesondere Sicherheitsnachweise, benötigt werden.

Die Informationsbausteine einzelner Objekte können mit geringem Aufwand für die Gestaltung weiterer Projekte mit vergleichbaren Anforderungen angepasst, aktualisiert und wiederverwendet werden. Den einzelnen Bausteinen wird auch die zutreffende rechtliche Bedeutung zugeordnet. Das betrifft Compliance in Bezug auf geltende internationale, nationale oder betriebliche technische Vorschriften und Gesetze, die von der juristischen Person zu erklären ist, die technische Einrichtungen bereitstellt. Diese Festlegungen werden den Verantwortlichen einzelner Elemente des Systems, die als technische Produkte bereitgestellt werden, zum Zeitpunkt der Bestellung bekannt gegeben und sind die Grundlage für die technische Abnahme der Produkte.

Einzelne komplexe Elemente, wie Maschinen, Subsysteme oder Teilanlagen, können in das System als digitaler Zwilling eingefügt und für Simulationen genutzt werden. Die räumliche Einordnung erfolgt unter Zugrundelegung der Koordinaten des Entscheidungsraums.

Mit der Nutzung der in Entwicklung befindlichen Technologie "digitaler Zwilling", innerhalb des Entscheidungsraums werden alle relevanten Informationen bereitgestellt.

Die Verwendung einzelner Elemente innerhalb eines Entscheidungsraums bietet den Vorteil, dass bei Änderungen das System mit seinen gespeicherten Informationen erhalten bleibt und ausschließlich die Eigenschaften des geänderten Elementes und der dazu gehörenden Relationen zu benachbarten Elementen angepasst werden müssen. Wenn innerhalb der Lebens- bzw. Nutzungsdauer des komplexen Fertigungssystems Änderungen vorgenommen werden, kann auf die gespeicherten Informationen der nicht geänderten Bestandteile zurückgegriffen werden und eine Verknüpfung hergestellt werden.

Als Robotertechnik bzw. Robotersysteme wird eine Entität bezeichnet, bei der Informationstechnik mit einer technisch machbaren Kinematik vereint ist. Die Interaktion mit der physischen Welt erfolgt auf der Basis von Sensoren, Aktoren und einer elektronischen Steuerung. Mit der Programmierung der Robotersteuerung wird das abgestimmte Zusammenarbeiten von Roboter-Elektronik und Roboter-Mechanik hergestellt. Ein wesentliches Element beim Einsatz moderner Roboter kann die Anwendung der Künstlichen Intelligenz (KI) sein. Der Entscheidungsraum lässt sich vorteilhaft für Robotersysteme verwenden. Schwerpunkt der folgenden Beschreibung sind daher automatisiert arbeitende, technische Arbeitssysteme, die mit Menschen zusammenarbeiten (Mensch-Technik-Interaktion) und die mit einer beliebigen Robotertechnik in einem Kollaborationsraum stattfinden. Das beschriebene System ist jedoch auch uneingeschränkt für die Realisierung anderer komplexer, automatisierter Maschinensysteme einsetzbar.

Sowohl im industriellen als auch in öffentlichen Bereichen, wie z. B. Großküchen, Krankenhäusern, Pflegeheimen oder für Transporte muss Personal durch Robotik ersetzt werden. Der Bedarf ergibt sich wegen der angestrebten und erforderlichen höheren Effizienz sowie dem Potential zur Einsparung von Ressourcen. Der Einsatz von Robotik ist aber auch erforderlich, wenn Personal ersetzt werden muss, welches nicht im erforderlichen Umfang zur Verfügung steht, und weil Gesundheitsgefahren sowie das Risiko von Unfällen von Personen vermieden werden können, wenn für potentiell gefährliche Arbeiten Roboter verwendet werden.

Für jede Roboteranwendung (Applikation) muss deren ausreichende technische Sicherheit bei einem möglichen Kontakt mit Menschen nachgewiesen werden. An Roboteranwendungen in nichtindustriellen bzw. öffentlichen Bereichen sind besonders hohe Anforderungen in Bezug auf deren technische Sicherheit (Gesundheits- und Unfallschutz) zu erfüllen.

Beim Einsatz eines Roboters, der mit dem Entscheidungsraum verknüpft werden kann, sind unter anderem durch folgende Kriterien zu berücksichtigen:
- Es kann immer ein unmittelbares Zusammentreffen von Personen und Robotern im gleichen Arbeitsraum stattfinden, wobei davon ausgegangen werden muss, dass die anwesenden Personen nur ein sehr geringes Gefahrenbewusstsein bezüglich allgemeiner Maschinentechnik und speziell zur Anwendung von Robotik haben werden.
- Es werden an einem Standort gleichzeitig mehrere und unterschiedliche Roboter eingesetzt.
- Roboter müssen sich aus einem System entfernen lassen und es muss möglich sein, neue Roboter bei Bedarf hinzuzufügen, ohne dass danach ein erneutes "erstmaliges" Inverkehrbringen stattfindet, wie es zurzeit mit der Definition einer "wesentlichen Veränderung" notwendig ist.
- In einer Roboterapplikation müssen mobile Roboter verwendbar sein.
- Die Roboter müssen ohne feststehende technische Schutzeinrichtungen, wie Schutzzäune, in unterschiedlicher Weise aufgestellt bzw. verwendet werden können.
- Die Roboter müssen flexibel einsetzbar sein und abwechselnd unterschiedliche Arbeitsaufgaben erfüllen, wozu verschiedene Werkzeuge zum Einsatz kommen können.
- Das Einrichten der Roboter für unterschiedliche Arbeitsaufgaben muss nach dem erstmaligen Inverkehrbringen eines Systems immer ohne Einsatz von Roboterspezialisten möglich sein.
- Die Beauftragung der Roboter mit verschiedenen Arbeitsaufgaben zu beliebigen Zeitpunkten muss auf einem einfachen Weg auch Mitarbeitern sicher möglich sein, die keine spezifischen Kenntnisse zu Robotern haben.

Grundvoraussetzung solcher Anwendungen ist, dass die erforderliche technische Sicherheit im Sinne des Gesundheits- und Unfallschutzes für jede mögliche Verwendung eines Roboters nachweislich vorliegt. Mit den genannten Anforderungen, insbesondere bei einer flexiblen Verwendung, ist das nur dann möglich, wenn durch das Robotersystem selbst und automatisch beim Anwählen der Nutzung eines Roboters die ausreichende Sicherheit hergestellt, geprüft und erhalten wird. Durch den komplexen Einsatz flexibler Roboter ist es nicht möglich, zum Zeitpunkt der Planung eines Systems bereits alle Merkmale und Relationen zu berücksichtigen, die sich im Verlauf einer langzeitlichen Nutzung hinsichtlich der technischen Sicherheit ergeben können. Die bestehende Sicherheit einer Roboteranwendung muss aber immer sichtbar, erkennbar und nachvollziehbar sein.

Mit der erforderlichen Transparenz vorhandener Sicherheit bei Roboteranwendungen muss der Hersteller dem Benutzer für jede einzelne Applikation eine spezielle und qualifizierte Dokumentation (insbesondere eine Betriebsanleitung) bereitstellen. Jede der wechselnden Anwendungen muss umfänglich Compliance zu geltenden technischen Sicherheitsstandards gewährleisten. Das betrifft sowohl die Eigensicherheit der technischen Systeme, wie gleichzeitig auch rechtliche, organisatorische und personenbedingte Festlegungen, die von dem jeweiligen technischen System abzuleiten sind.

Bei der Bewertung des sicheren Betriebs von Robotern oder anderen technischen Arbeitssystemen werden unter anderem folgende Anforderungen gestellt:
- permanente aktive Erfassung der erforderlichen Positionen und Geschwindigkeiten (mobiler) Roboter während ihrer Verwendung,
- permanente Erfassung aller relevanten Informationen in der Arbeitsumgebung, mit den verwendeten Maschinen und den Schnittstellen, in Bezug auf die Bedienung durch Roboter und die Anwesenheit von Personen, die gefährdet werden könnten,
- Echtzeitwirkung des Systems,
- Erkennen der Gefährdungen, die sich aus den Prozessen, den verwendeten Werkzeugen und den damit verbundenen Energiequellen ergeben,
- Erkennen der Gefährdungen, die sich aus den räumlichen Verhältnissen der Arbeitsumgebung ergeben, wie Arbeitsplätze, Zugänge zur Anlage, Schnittstellen zu angrenzenden Maschinen, Zusammenwirken der Maschinen untereinander.

Im System anwesende Personen werden weiträumig erkannt und permanent in ihren Bewegungen überwacht. Ihr Verhalten bezüglich möglicher Gefährdungen wird ausgewertet, wozu der Einsatz von Künstlicher Intelligenz möglich ist.

Gleichzeit wird permanent überwacht, ob sich an den Schnittstellen zu benachbarten Bereichen oder an Zugangswegen weitere Personen unerwartet dem System nähern und die Gefahr besteht, dass diese zu bestimmten Zeitpunkten definierte Gefahrenbereiche betreten. In Abhängigkeit des Richtungsvektors beliebiger menschlicher Bewegungen, mit denen neben der Richtung (x, y) auch die jeweilige Höhe (z) bekannt ist, können Differenzierungen des Verhaltens eines Roboters in Bezug auf besonders gefährdete Körperteile einer Person (Kopf, Hals) vorgenommen werden.

Das System kann entlang einer festgelegten Roboterbahn das Gefahrenpotential der Bewegung für jeden einzelnen Punkt automatisch berechnen. Mit den Augenblickswerten für Geschwindigkeit und Beschleunigung wird für jeden einzelnen Punkt der Bahn ein Vektor berechnet. Dieser Vektor repräsentiert mit seiner Länge und seiner Richtung das Gefährdungspotential des Roboters in jedem einzelnen Bahnpunkt des Koordinatensystems. Unter Berücksichtigung der relevanten Daten, die dem System infolge der vorausgegangenen Simulation und weiteren Parametern bekannt sind, wie z. B. Auslegung der Achsen, transportierte Last, Reaktionszeit des Systems sowie Anhaltezeit des Roboters, berechnet das System diese Gefährdungsvektoren automatisch. Das Berechnungsmodul kann sicherheitsgerichtet, also mit dem Fokus auf dem Faktor Sicherheit gegenüber anderen Faktoren, wie z. B. Schnelligkeit, validiert werden.

Damit liegt ein sicheres und determiniertes Ergebnis für die jeweils erforderlichen Sicherheitsabstände im Raster des Vektorraumes vor, ohne dass dazu umfängliche Bereiche ermittelt werden müssen. Die Vektoren können je nach Bedarf für beliebige Punkte des Roboters bzw. eines anderen Arbeitssystems, z. B. der Mittelpunkt des Werkzeugs oder die verschiedenen Gelenke, berechnet werden.

Mit den im System zur Verfügung stehenden Werten wird ein Roboter proaktiv und optimiert beeinflusst, indem in Abhängigkeit von der jeweiligen Situation z. B. dieser seine geplante Bewegung nicht startet, seine vorhandene Geschwindigkeit rechtzeitig verringert, eine Ausweichbewegung veranlasst, eine zusätzliche optisch bzw. akustische Warneinrichtung eingeschaltet, eine abweisende oder sonstig wirksame, zusätzliche stoßreduzierende Schutzeinrichtung u. ä. ausgelöst oder ein Sicherheitsstopp veranlasst wird. Damit können Gefährdungssituationen nicht entstehen. Diese Systemsteuerung kann zur Auswahl der erforderlichen Sicherheitsreaktionen durch den Einsatz von Künstlicher Intelligenz (KI) unterstützt werden.

Eine vorteilhafte Sensoranordnung im Sinne der Erfindung stellt z. B. ein Kamerasystem oder ein Lidarsystem (light detection and ranging) dar oder umfasst zumindest einen der vorgenannten Sensoren. Ein Lidar ist eine dem Radar verwandte Methode zur optischen Abstands- und Geschwindigkeitsmessung sowie zur Fernmessung atmosphärischer Parameter. Eine weitere Ausführungsform der Sensoranordnung stellt ein Radar dar. Die Sensoranordnung ist selbstüberwachend ausgeführt, wobei die Selbstüberwachung in den jeweiligen Sensor integriert ist oder durch eine übergeordnete Ebene der Steuerung überwacht wird. Hierbei kann z. B. der Einsatz einer dynamischen Sicherheits-Signaleinrichtung, einer nachfolgend näher beschriebenen, besonders vorteilhaften Ausführungsform einer Signaleinrichtung, erfolgen, wenn die Sensoranordnung als Kamera ausgebildet ist, oder das Arbeitssystem führt eine bestimmte Bewegung aus, deren korrekte Detektion durch die Sensoranordnung geprüft wird.

Es hat es sich als vorteilhaft erwiesen, wenn die wenigstens eine Signaleinrichtung als ein optisches Signalgerät zum Warnen von Menschen, wie z. B. Bedienpersonen, an der Arbeitsvorrichtung ausgeführt ist, das eine aktive Änderung der Lichtabgabe im Bereich der Arbeitsvorrichtungen, z. B. der Anlagen und Maschinen, ermöglicht und ausführt. Die Änderung erfolgt in Abhängigkeit von der Position, der Bewegungsrichtung und/oder der Geschwindigkeit der Bedienperson, wobei die Änderung der Lichtabgabe weiterhin in Abhängigkeit vom Zustand und/oder der aktuellen Betriebsart der Arbeitsvorrichtung erfolgt. Das optische Signalgerät wird auch als dynamische Sicherheits-Signaleinrichtung bezeichnet.

Das optische Signalgerät umfasst nach einer bevorzugten Ausführungsform ein zwei- oder dreidimensional berührungslos wirkendes Messsystem als Sensoranordnung, ausgeführt z. B. als Kamera-, Radar- oder Lidarsystem, ebenso als Flächenscanner mit Rohdatenabgriff, wobei jeweils die Position, die Richtung und die Geschwindigkeit der Bedienperson erfasst werden.

Die optische Signaleinrichtung dient zum Anzeigen von Zuständen oder zulässigen, sich dynamisch ändernden, Arbeitsbereichen sowie dem aktiven Warnen von Bedienern an Anlagen und Maschinen. Sie ermöglicht eine bedarfsgerechte und zielgerichtete Warnung des Bedieners in Gefahrensituationen bzw. bevor diese eintreten. Darüber hinaus kann die Bedienperson in Anwendungen zur Mensch-Roboter-Kooperation durch eine örtliche und zeitliche Änderung der Beleuchtung bei seinen Montagearbeiten und Laufwegen gesteuert bzw. unterstützt werden. Die Änderung der Lichtabgabe kann durch RGB-Farbwahl, Dimmen, Ausblenden von Bestandteilen einer matrixartigen Anordnung von Leuchtelementen, aktorischer Nahführung und/oder Fokussierung eines Lichtstrahles im sichtbaren Lichtspektrum erfolgen.

Die optische Signaleinrichtung ist nach einer vorteilhaften Ausgestaltung zur beweglichen Lichtabgabe aus wenigstens einer Lichtquelle, jedenfalls einer geringen Anzahl von Lichtquellen, in Abgrenzung zu den oben erwähnten Matrixsystemen, ausgeführt und verfügt dazu über eine Aktorik, die beispielsweise servomotorisch oder auf Basis eines Piezoeffekts angetrieben wird und die Ausrichtung der wenigstens einen Lichtquelle beeinflusst. Dabei kann der Antrieb unmittelbar auf einen Träger der wenigstens einen Lichtquelle, z. B. wie oben bereits als dynamische Sicherheits-Signaleinrichtung erwähnt, oder mittelbar auf ein Spiegelsystem, mit dem das Licht der wenigstens einen Lichtquelle abgelenkt wird, wirken. Zweckmäßig ist die Anbindung an ein Bussystem bzw. industrielles Ethernet mit einer übergeordneten Steuereinheit.

Die optische Signaleinrichtung mit Personentracking ermöglicht ein proaktives, bedarfsgerechtes Warnen von Personen sowie Informieren über den aktuellen Zustand dynamischer Sicherheitseigenschaften, wie Sicherheitszonen oder geplante Verfahrbereiche für die nächsten Produktionsbewegungen des integrierten Fertigungssystems, und trägt damit zur Erhöhung der Sicherheit bei. Sie führt zur Verbesserung neuer dynamischer, flexibler Automatisierungskonzepte mit kollaborierenden Tätigkeiten. Weiterhin erfolgen eine Flexibilisierung von Automatisierungsanwendungen und Anwendungen zur Mensch-Roboter-Kooperation sowie eine Reduzierung von Maschinenstillstandzeiten durch eine vorausschauende Warnung, bevor eine Gefährdung des Bedieners und ein dadurch ausgelöster Sicherheits-Stopp der Anlage erfolgt, eintreten. Die proaktive Ansteuerung folgt aus der Berechnung und der vorausschauenden Überwachung. Die Steuerung kennt die Bewegung der Maschine bzw. des Roboters im Vorfeld, da die planmäßige Bahn in einem Speicher abgelegt ist, und prüft die die relevanten Bereiche auf Gefährdungen. Eine Reaktion erfolgt, wenn die Bewegungsvektoren von Mensch und Maschine sich kreuzen bzw. zu nahe kommen.

Die Aufgabe der Erfindung wird ebenfalls gelöst durch ein Verfahren zur Überwachung und Steuerung eines technischen Arbeitssystems, das Arbeitssystem ausgebildet als ein wenigstens eine Arbeitsvorrichtung und/oder wenigstens eine Signaleinrichtung umfassender dreidimensionaler Entscheidungsraum, der einen Kollaborationsraum umfasst, in dem eine Steuerungseinrichtung das technische Arbeitssystem, das mit Menschen zusammenarbeitet, steuert. Eine Sensoranordnung überwacht den Entscheidungsraum und gewinnt daraus Sensordaten.

Nach der Erfindung umfasst die Steuerungseinrichtung ein KI-System, wobei die Sensordaten an die Steuerungseinrichtung übertragen und dort durch das KI-System gemeinsam mit einem digitalen Zwilling des integrierten Fertigungssystems verarbeitet und verknüpft werden. Der digitale Zwilling ist an eine Datenbank zur Übertragung von Daten, bevorzugt bidirektional, angebunden. In der Datenbank werden aus einer Vielzahl, bevorzugt vergleichbare Arbeitssysteme, z. B. integrierte Fertigungssysteme auf einem ähnlichen Gebiet der Technik, gewonnene, für eine automatisierte Entscheidungsfindung relevante Informationen abgelegt. Aus der Steuerungseinrichtung werden Aktordaten ausgegeben und an die wenigstens eine Arbeitsvorrichtung und/oder die wenigstens eine Signaleinrichtung übertragen und in Aktionen umgesetzt. Weiterhin werden durch das KI-System Sensordaten und/oder Aktordaten, die für die automatisierte Entscheidungsfindung in vergleichbaren Arbeitssystemen relevant sind, selektiert, an die Datenbank übertragen und dort abgelegt. Die Aktordaten sind dabei auf Arbeitsvorrichtungen und/oder auf Signaleinrichtungen gerichtet und dienen deren unmittelbarer Ansteuerung.

Die Sensordaten umfassen alle relevanten Informationen in der Arbeitsumgebung, mit den verwendeten Maschinen und den Schnittstellen, in Bezug auf die Bedienung durch Roboter und die Anwesenheit von Personen, die gefährdet werden könnten. Das Erkennen der Gefährdungen, die sich aus den räumlichen Verhältnissen der Arbeitsumgebung ergeben, wie Arbeitsplätze, Zugänge zur Anlage, Schnittstellen zu angrenzenden Maschinen, Zusammenwirken der Maschinen untereinander, ist vorgesehen. Ebenso erfolgt ein Erkennen der Gefährdungen, die sich aus den Prozessen, den verwendeten Werkzeugen und den damit verbundenen Energiequellen ergeben. Weiterhin wird eine Dokumentation des Arbeitssystems mit einem Nachweis der Sicherheit, basierend auf der Beurteilung der erfassten Gefährdungen und definierten Reaktionen des Systems, erstellt.

Die Gefährdungen, die durch Robotik oder eine andere technische Arbeitsvorrichtung in einem definierten Raum auftreten können, sind mit der Durchführung der Planung determiniert bekannt und müssen gegenüber stochastischen Störungen überwacht werden. Das sind z. B. Gefährdungen die durch den Zutritt von Personen in diesem Raum erzeugt werden und sicher auszuschließen sind.

Der Raum muss deshalb für das Erkennen des Zutritts von Personen überwacht werden. Wenn eine Person den Raum betritt, wird mit dem System ein Vektor ermittelt, dessen Länge der Augenblicksgeschwindigkeit der Person in jedem Punkt des Koordinatensystems entspricht. Der Richtungsvektor von Person(en), wird mit den relevanten Richtungsvektoren des Roboters verglichen. Wenn im Vergleich der Vektoren mit den vorliegenden Abständen von Gefährdungen auszugehen ist, werden durch die Steuerung des Systems automatisch entsprechende Maßnahmen eingeleitet.

Da die Richtungsvektoren des Roboters determiniert bekannt sind, wird gegenüber stochastisch auftretenden Gefährdungen proaktiv entschieden. Das heißt, dass die Bewegungen des Roboters, die geplant und determiniert vorliegen, im Vergleich mit den stochastischen Vektoren bereits beeinflusst werden, bevor sie gestartet wurden, wenn das die Abstände erfordern, die zu Gefährdungen führen würden. Wenn der überwachte Raum in Bezug auf die vorgesehenen, automatisierten Bewegungen ausreichend groß überwacht wird, sind Gefährdungen damit sicher ausgeschlossen. Vorteilhafterweise werden auch Personen innerhalb und bei der Annäherung an den Entscheidungsraum erkannt und permanent in ihren Bewegungen überwacht, wobei ihr Verhalten bezüglich möglicher Gefährdungen mittels des KI-Systems ausgewertet wird.

Um ein Kamerasystem als ein Beispiel für eine Sensoranordnung sicherheitsgerichtet verwenden zu können, müssen zurzeit bestehende Normen mit Sicherheitsfestlegungen nur insoweit angewendet werden, wie nachgewiesen werden muss, dass das Kamerasystem oder die Sensoranordnung ausreichend leistungsfähig ist. Bestehende Forderungen, die mit der in Europa geltenden Maschinenrichtlinie vorschreiben, dass Sicherheitsbauteile, die einzeln in Verkehr gebracht werden, gesondert zertifiziert werden müssen, werden für das Kamerasystem oder die Sensoranordnung im Sinne der Erfindung nicht berücksichtigt. Es wird nicht angestrebt, für das Kamerasystem eine Zertifizierung als Sicherheitsbauteil gemäß Maschinenrichtlinie Anhang IV zu erhalten.

Mit der Planung wird als erstes der Raum bestimmt, der für die Maschinen und Subsysteme erforderlich oder der durch die gegebenen Verhältnisse definiert ist. In diesem Raum werden alle Störkanten, Einbauten und Bedingungen eingeplant, die durch die ausgewählten Arbeitsbereiche festgelegt sind.

Es folgen die feststehenden und notwendigen räumlichen Ergänzungen, wie z. B. Wege, Fundamente, Medienanschlüsse, allgemeinen Beleuchtungseinrichtungen, Be- und Entlüftungsanlagen, Einrichtungen für den allgemeinen Brandschutz usw. Nach dieser Stufe werden im Entscheidungsraum die technologiebezogenen und personenbezogenen Daten ergänzt. Hierzu gehören z. B. die erforderlichen Maschinen, Anlagen, Subsysteme und Werkzeuge, Arbeitsverrichtungen, Taktzeiten, vorliegende Temperaturen, Medien- und Materialbedarf, vorhandene oder zu erwartende Gefahrstoffe, Abstellflächen, spezielle Beleuchtungseinrichtungen, Arbeitskräftebedarf an den verschiedenen Arbeitsplätzen, Zugangs- und Fluchtwege, Aufenthaltsflächen, zeitliche Festlegungen zu technologischen Abläufen usw.

Die jeweiligen Informationen für alle Bedingungen des Systems, die Versorgungstechnik, die Charakteristik der erforderlichen technischen Ausrüstungen, einschließlich deren Schnittstellen, etc. werden dauerhaft im Entscheidungsraum hinterlegt bzw. gespeichert. Nach dem Abschluss dieser Vorplanung werden der oder die Roboter oder andere Arbeitsvorrichtungen in das System eingefügt. Dazu werden die jeweiligen Aufstellflächen und alle Punkte festgelegt, an denen durch den Roboter Verrichtungen erfolgen müssen.

Die notwendigen Bahnen der Roboter bzw. der Achsbewegungen werden mit einer Software im vorbereiteten Entscheidungsraum simuliert. Die Bahnen der einzelnen Achsen des bzw. der Roboter oder eines anderen Arbeitssystems werden mit der Simulation bestimmt. Kollisionen mit feststehenden oder beweglichen Einrichtungen werden damit erkannt und ausgeschlossen. Weiterhin ist die Optimierung der einzelnen Bewegungen hinsichtlich Zeit- und Raumbedarf, Schnittstellen, Bewegungsgeschwindigkeiten, Bahnkurven und Überschneidungen von Bewegungen möglich.

Die Abstände der einzelnen Punkte einer Roboterbahn bzw. deren Koordinaten im Koordinatensystem können beliebig festgelegt und jederzeit an den Bedarf angepasst werden. Das Raster des Koordinatensystems ist dazu beliebig grob oder fein auf die zu erwartenden Anforderungen einzustellen. Dasselbe trifft auch auf ein anderes Arbeitssystem zu. Nach der Simulation sind neben den Koordinaten im Entscheidungsraum für jeden einzelnen Punkt der Roboterbahnen ebenfalls die feststehenden gerichteten Geschwindigkeits- und Beschleunigungswerte bekannt (x, y, z, v, a). Ergebnis der abgeschlossenen Planung mit dieser Simulation der Roboterbewegung ist der exakte Koordinatenverlauf der einzelnen Roboterbewegungen im Entscheidungsraum. Die Planung dieser Bahnen wird automatisch in die jeweilige Robotersprache übersetzt.

Bevorzugt erfolgt die Erfassung und Auswertung der Bewegungen als Punktwolke, dreidimensionales Kamerabild, Ortsinformation oder Vektorinformation, bereitgestellt von der Sensoranordnung. Die Überwachung von Personen erfolgt daher im Allgemeinen durch die Erfassung und Auswertung von ausreichend genauen Punktwolken, was die Einhaltung des erforderlichen Datenschutzes garantiert.

Es hat sich als besonders effektiv erwiesen, wenn das Verfahren eine Echtzeitwirkung entfaltet, indem das KI-System eine erforderliche Reaktionszeit definiert oder der Datenbank entnimmt, wobei die Reaktionszeit z. B. auf den Anforderungen aus einer Norm basiert oder prozessabhängig beispielsweise 10 ms, 200 ms oder 1 s betragen kann und in die automatisierte Entscheidungsfindung einfließen lässt.

Besondere Vorteile ergeben sich, wenn die durch die wenigstens eine Arbeitsvorrichtung umgesetzten Aktionen eine proaktive, vorausschauende und optimierte Beeinflussung der jeweiligen Situation, insbesondere einer Gefahrensituation, im Entscheidungsraum umfassen.

Nach einer vorteilhaften Ausführungsform ist es vorgesehen, dass die wenigstens eine Arbeitsvorrichtung, z. B. ein Roboter oder eine andere Maschine, mit beweglichem Arbeitsorgan ihre geplante Bewegung nicht startet, eine vorhandene Geschwindigkeit rechtzeitig verringert, eine Ausweichbewegung veranlasst, eine abweisende oder sonstig wirksame, zusätzliche stoßreduzierende Schutzeinrichtung u. ä. auslöst und/oder einen Sicherheitsstopp veranlasst. Alternativ hierzu oder ergänzend übernimmt die Sensoranordnung des Entscheidungsraums, z. B. das Kamerasystem, das Lidarsystem, das Radarsystem oder ein anderes Sensorsystem, die Überwachung der geplanten Bewegungsbahn der Arbeitsvorrichtung, z. B. der Roboterbahn, und reagiert sicherheitsgerichtet, wenn die Arbeitsvorrichtung eine mit der vorgesehenen Toleranz geplanten Bahn nicht einhält. Alternativ hierzu oder ergänzend wird eine optische und/oder akustische Warneinrichtung, wie z. B. ein optisches Signalgerät, eingeschaltet.

Es hat sich als vorteilhaft erwiesen, wenn die Sensordaten eine Erkennung im Entscheidungsraum anwesender oder sich diesem nähernder Personen, z. B. mittels Gesichts-, Körper- oder Bewegungserkennung, umfasst. Mittels eines Abgleichs mit in der Datenbank hinterlegten Personeneigenschaften erfolgt eine Differenzierung der zulässigen Gefährdungen der Person in Abhängigkeit von deren auf den Personeneigenschaften basierenden Berechtigungen, die demnach z. B. auf der vorliegenden Qualifikation basieren kann. Damit können Einrichter und spezielle Instandhaltungsfachkräfte freier agieren, als einfache Bediener. Diese Differenzierung wird ebenfalls durch das KI-System verarbeitet und verknüpft.

Informationen zu einzelnen Systemelementen des technischen Arbeitssystems werden funktionellen, z. B. kinematisch, pneumatisch, elektrisch, oder konstruktiven Bausteinen zugeordnet erfasst.

Besondere Vorteile resultieren, wenn bei einem Ersatz der Arbeitsvorrichtung und/oder der Signaleinrichtung oder beim Hinzufügen einer weiteren Arbeitsvorrichtung und/oder einer weiteren Signaleinrichtung und/oder einer weiteren Sensoranordnung diese automatisch in das technische Arbeitssystem integriert werden. Dabei werden die alten Eigenschaftsdaten durch die neuen ersetzt und neue Verknüpfungen mit dem digitalen Zwilling erzeugt. Dies erfolgt einschließlich Änderung oder Ergänzung der zur Arbeitsvorrichtung oder der Signaleinrichtung gehörigen Eigenschaftsdaten, die in ein übergeordnetes System, z. B. in die Datenbank, Eingang finden. Die Eigenschaftsdaten werden mit der Arbeitsvorrichtung oder der Signaleinrichtung mitgeliefert oder gesondert in die Datenbank eingetragen, um bei den Entscheidungen der KI berücksichtigt zu werden. Die erfindungsgemäße Lösung nach einer solchen Ausgestaltung erleichtert vor allem auch das sichere Inverkehrbringen neuer Komponenten bzw. technischen Teilsysteme als Bestandteile des übergeordneten automatisiert arbeitenden technischen Arbeitssystems.

Mit der Verwendung des erfindungsgemäßen Entscheidungsraums ist die Planung des Einsatzes beliebiger Arbeitsvorrichtungen, z. B. Roboter, bei Anwesenheit von Personen bzw. Menschen im Kollaborationsraum möglich, ohne dass diese Personen Roboterspezialisten sind. Die Gefährdungen im Kollaborationsraum werden auch beherrscht, wenn mehrere Roboter verwendet werden. Ungeschultes Personal kann mit intuitiver Bedienung die jeweiligen Aufgaben für die (ggf. auch mobilen) Roboter festlegen und auslösen. Die dazu notwendigen sicherheitsrelevanten Parameter, wie zulässige Geschwindigkeiten der Roboter und notwendige Sicherheitsabstände im flexiblen Arbeitsumfeld, werden durch die Systemsteuerung selbst dynamisch und automatisch festgelegt.

Es wird die Möglichkeit geschaffen, derartige Systeme zu zertifizieren und in Verkehr zu bringen. Für den Nachweis der ausreichenden technischen Sicherheit müssen die Grenzen der Applikation ermittelt werden, was unter anderem beinhaltet: zulässige Flexibilität, zulässige Geschwindigkeiten der einzelnen Achsen eines Roboters, Anforderungen bei der Positionierung und der Verwendung von Werkzeugen, Taktzeit für einzelne Arbeitsaufgaben innerhalb des Systems, Anzahl der Subsysteme/Maschinen, erforderliche Bewegungsprofile, Bedienereinfluss auf Funktionen und Bewegungen, Kommunikationsschnittstellen und Protokolle zwischen den Subsystemen, verwendete Software und Validierung der Programme, räumliche Grenzen, Umgebungseinflüsse (Licht, Temperatur etc.), verwendete Arbeitsverfahren und Organisation, Materialfluss im und durch das System, Umwandlungsvorgänge (chemische, physische, energetische), Energiearten (Druck, Strom, Strahlung, Bewegung etc.), Betriebsarten, vorhersehbare Einricht- und Instandhaltungstätigkeiten, zeitliche Abfolge und Verhältnis sicherheitsrelevanter Zustände (häufig/selten, dauernd/immer und daraus folgende Risikobewertung, z. B. Explosionsschutz), Schnittstellen der Maschinen und Grenzen des integrierten Fertigungssystems und der Informationsfluss.

Nach Festlegung der Grenzen ist die Zuordnung zu den geltenden gesetzlichen und normativen Anforderungen notwendig. Nach Beurteilung und Validierung der ausreichenden Sicherheit dieser Planung erfolgt die Realisierung des Systems einschließlich des Nachweises der technischen Sicherheit.

Für die Realisierung und die anschließende Abnahme einer spezifischen Anlage werden die Informationen zu Grunde gelegt, die bei der Planung aufgenommen wurden. Die Planungsdaten aus dem Entscheidungsraum können dazu in unterschiedlichen weiterverwendbaren Formaten, beispielsweise in einem üblichen Tabellen- oder Textverarbeitungsformat, ausgegeben werden. Dieser Ablauf gilt auch für Leistungen, die als Änderungen in einem bereits bestehenden System vorgenommen werden sollen.

Mit der Erfassung aller Elemente des Systems im Zuge der Planung und der Simulation der automatisierten Bewegungen liegen alle notwendigen Informationen vor, die zur Erstellung der Dokumentation, insbesondere für Sicherheitsnachweise, erforderlich sind. Demnach wird vorteilhafterweise ein statisches Sicherheitskonzept, d. h. ein unveränderlich dokumentiertes Sicherheitskonzept, erstellt. Dieses umfasst Dokumente, in denen ein Risiko oder eine Gefährdung festgestellt werden. Ein Betreiber des technischen Arbeitssystems erhält dann die Unterlagen, um auf deren Grundlage das Arbeitssystem zu betreiben.

Die Erstellung der kompletten Betriebsanleitung und der zugehörigen Dokumentation für die jeweilige Applikation erfolgt elektronisch und wird durch das System intelligent unterstützt. Relevante Auszüge werden zum Anlernen und zur Einweisung neuer Mitarbeiter bzw. für regelmäßige Arbeitsschutzunterweisungen sowie für Zwecke der Instandhaltung oder Prüfung heruntergeladen, ausgedruckt oder gezielt elektronisch bereitgestellt. Ausreichende Sicherheit liegt vor, wenn unter Beachtung der technischen Parameter verwendeter Ausrüstungen, dem Nachweis der Sicherheitsfunktionen und die Bereitstellung der erforderlichen Bedienungs- und Sicherheitshinweise mit dem erfindungsgemäßen System die Sicherheit automatisch nachgewiesen ist. Die Rechtssicherheit für die Zulässigkeit der Verwendung des technischen Arbeitssystems ist dann gewährleistet, wenn die einzelnen Festlegungen und Entscheidungen hinsichtlich des sichern technischen Zustands jederzeit verständlich zur Verfügung stehen, Abweichungen sofort erkannt werden und zu ausreichenden Reaktionen führen. Damit wird eine adaptive Gefährdungsbeurteilung (GBU) bzw. Risikobeurteilung (RB), nachfolgend unter dem Begriff Sicherheitsbeurteilung gefasst, möglich.

Wenn sich der rechtliche Rahmen bzw. die Vorgaben zum Nachweis der Produktsicherheit bzw. zum Unfall- und Gesundheitsschutz in der Zeit der Verwendung eines Arbeitssystems ändern, wird dieses bestehende Arbeitssystems mit den geänderten Informationen abgeglichen. Notwendige Anpassungen oder Änderungen können davon abgeleitet, organisiert und dokumentiert werden. Auch technische Änderungen am System wegen geänderter Arbeitsaufgaben, Verbesserungen oder Aktualisierungen können vorgenommen werden.

Durch die Speicherung der rechtlich relevanten Aussagen zu den einzelnen Systemelementen wird die Erstellung der Gesamtdokumentation des Systems, einschließlich Warnhinweisen und Benutzerinformationen für ein neues System, ebenso ohne weiteren Aufwand möglich, wie nach Änderungen. Das betrifft auch die jeweils erforderlichen Zertifizierung in Bezug auf die geltenden Vorschriften und letztendlich der Nachweis der Rechtssicherheit im Sinne der Verwendung des technischen Arbeitssystems. Dadurch erfolgt das Sammeln von Informationen auch für rechtliche Entscheidungen.

Einzelne Informationen, die für Bediener zu bestimmten Zeitpunkten oder für die jeweiligen Arbeitsaufgaben vorliegen müssen (z. B. Arbeitspläne, Warnhinweise, Einweisungen etc.), müssen nicht als vollständige Betriebsanleitung bereitgestellt werden. Für den aktuellen Betrieb bzw. für den jeweiligen Prozess werden durch das System immer nur direkt die jeweils erforderlichen Dokumente, z. B. Bedienungs- oder Warnhinweise, an einem oder mehreren Bildschirmen vor Ort ausgegeben. Damit liegen immer genau die Informationen vor, die für einen sicheren Betrieb des Arbeitssystems benötigt werden.

Der erfindungsgemäße Entscheidungsraum bzw. das erfindungsgemäße Verfahren zur Überwachung und Steuerung eines technischen Arbeitssystems zeichnet sich insbesondere durch folgende Punkte aus, die bisher im Maschinen- und Anlagebau und beim Einsatz von Robotern nicht bekannt sind und nicht verwendet werden:
- Der Entscheidungsraum ist Voraussetzung für die Planung, die Realisierung, die Verwendung und den Nachweis der technischen Sicherheit für ein geschlossenes technisches Arbeitssystem. In dieser Komplexität ist das bisher mit keinem bekannten Planungssystem für automatisierte Maschinentechnik möglich. Eine Trennung der einzelnen Arbeitsschritte und Funktionen in unterschiedliche Systeme ist nicht vorgesehen. Es werden alle Gefährdungen eines technischen Systems ausreichend berücksichtigt, wie z. B. mechanische, elektrische Gefährdungen, EMV, Verwendung von Gefahrstoffen, Ergonomie, Brand- und Explosionsschutz usw.
- Das System Entscheidungsraum trifft für den gesamten Lebenszyklus eines technischen Arbeitssystems zu und umfasst auch den dauerhaften Nachweis der technischen Sicherheit hinsichtlich Gesundheits- und Arbeitsschutz.
- Geltende nationale oder betriebliche technische Vorschriften können zugrunde gelegt werden.
- Informationen aus der Planungsphase stehen den Lieferanten einzelner Ausrüstungen, dem Gesamtverantwortlichen für das komplette Arbeitssystem und auch dem Anwender zur Verfügung. Änderungen können vorgenommen werden und ein Verbesserungsprozess wird unterstützt.
- Alle Informationen zur verwendeten Technik, zu den technologischen Anforderungen und zu notwendigen Bewegungen im Arbeitssystem werden dem Entscheidungsraum zugeordnet. Das können auch räumliche Einschränkungen, Energieversorgungseinrichtungen und Umgebungsbedingungen sein. Örtlichkeiten und Ausdehnungen im Entscheidungsraum werden durch die Koordinaten x, y, z beschrieben; Bewegungen unter Verwendung von Geschwindigkeits- und Beschleunigungswerten zusätzlich durch richtungsorientierte Geschwindigkeits- und Beschleunigungsvektoren.
- Die Sicherheit der Roboter bzw. des technischen Arbeitssystems hängt nicht von der jeweiligen (Roboter-)Steuerung ab, sondern wird umfänglich durch die Systemsteuerung gewährleistet. Damit können alle bekannten Roboter und technischen Arbeitsvorrichtungen verwendet werden.
- Da der Systemsteuerung alle Achsbewegungen der Roboter bzw. technischen Arbeitssysteme in beliebiger Auflösung determiniert bekannt sind, reagiert die Systemsteuerung bei erkannten Gefährdungen proaktiv. Notwendige Reaktionen für die Roboter werden gegebenenfalls bereits veranlasst, wenn diese ihre Bewegungen noch nicht gestartet haben. Die Roboterbewegungen werden damit unter Beachtung einer zukünftigen und zu erwartenden Entwicklung dynamisch und in Echtzeit gesteuert. Geeignete Maßnahmen können bereits veranlasst werden, lange bevor durch eine Person eine bestimmte und fest definierte Grenze erreicht wurde.

Mit den Werten x, y, z, v und a entlang einer Roboterbahn werden durch das System automatisch die Vektoren berechnet, die damit auch die Grundlage einer automatisch möglichen Risikobeurteilung des Systems in Bezug auf die Gefährdungen des Roboters sind. Damit unterscheidet sich diese Konzeption wesentlich von allen bekannten Strategien, bei denen es nicht möglich ist, die Risiken eines Roboters automatisch zu bestimmen.

Zur Vermeidung einer Gefährdung zwischen Personen und Robotern sind keine umfassenden, definierten Schutzbereiche mehr erforderlich, sondern nur noch unmittelbare Abstände. Die Richtungsvektoren, welche die Augenblickswerte der Bewegungsrichtung mit der jeweiligen Geschwindigkeit und der Beschleunigung von Personen und Roboter anzeigen, werden als Grundlage der Berechnung des jeweils erforderlichen Sicherheitsabstandes verwendet. Es wird immer die kürzeste Strecke zwischen einem Roboter und einer Person erfasst. Der gesamte Arbeitsbereich wird dazu weiträumig durch ein Kamerasystem oder eine andere Sensoranordnung dreidimensional überwacht.

Mit der proaktiven Steuerung eines Roboters bzw. technischen Arbeitssystems in einem Entscheidungsraum sollen Berührungen zwischen Robotern und Personen grundsätzlich ausgeschlossen sein.

Die Überwachung möglicher Kollisionen im Arbeitssystem erfolgt mit einem komplexen Kamerasystem oder einer anderen Sensoranordnung. Es können alle geeigneten Kameras bzw. Sensoranordnungen verwendet werden, auch wenn diese nicht als Sicherheitssensoren oder Sicherheitsbauteile zertifiziert sind. Die erforderliche Sicherheit des Kamerasystems wird durch das dafür vorgesehene redundante System sowie durch Mechanismen zur Fehlererkennung vor einem gefährlichen Ausfall gewährleistet. Es ist nicht ausgeschlossen, den Entscheidungsraum bei einfachen Anwendungen auf der Grundlage konventioneller Sicherheitssensoren zu konzipieren oder solche zusätzlich zum Kamerasystem zu nutzen.

Vorgesehene Räume und Einrichtungen können effektiv und ausreichend genau mit innovativen 3D-Raumscanner-Systemen erfasst werden. Im Rahmen des Systems Entscheidungsraum lassen sich somit optimal moderne Technologien wie digitaler Zwilling, Künstliche Intelligenz und CNC-Steuerungen für Roboter verwenden. Mit dem Entscheidungsraum lassen sich somit mehrere innovative Technologien zusammenführen. Es können Konzepte zur sicheren Verwendung von Robotern umgesetzt werden, die zurzeit mangels geeigneter Sensoren nicht möglich sind.

Die Roboterplanungen erfolgen nach vorteilhaften Ausgestaltungen des erfindungsgemäßen Verfahrens nicht mehr durch die direkte Programmierung der Robotersteuerung, sondern über ein Simulationsprogramm. Dazu sind drei unterschiedliche Konzepte möglich:
- Mit der Simulation erfolgt direkt die Steuerung der Kinematik der Roboter.
- Nach der Simulation werden die Bahndaten in die Programmierung der Roboter übersetzt.
- Das Kamerasystem bzw. die Sensoranordnung des Entscheidungsraums übernimmt die Überwachung der geplanten Roboterbahnen und die Steuerungseinrichtung reagiert sicherheitsgerichtet, wenn der Roboter eine mit der vorgesehenen Toleranz geplanten Bahn nicht einhält.

Die Erstellung der Dokumentation des Arbeitssystems mit dem Nachweis der Konformität bzw. der Compliance in Bezug auf zugrundliegenden Vorschriften wird durch das Planungssystem Entscheidungsraum effizient und aktiv unterstützt. Mit der derart ausgestalteten Dokumentation des Arbeitssystems wird ein statisches Sicherheitskonzept erstellt, dass insbesondere sicher in der Anwendung und gesichert gegen unbefugte Veränderung ausgeführt ist.

Anhand der Beschreibung von Ausführungsbeispielen und ihrer Darstellung in den zugehörigen Zeichnungen wird die Erfindung nachfolgend näher erläutert. Es zeigen:
Fig. 1: schematisch eine perspektivische Ansicht einer Ausführungsform einer erfindungsgemäßen Einrichtung zu Überwachung eines Entscheidungsraums und Steuerung wenigstens einer Arbeitsvorrichtung;
Fig. 2: ein Blockschema für den Informationsfluss an einer Peripherie einer Ausführungsform einer erfindungsgemäßen Einrichtung zur Überwachung und Systemsteuerung;
Fig. 3: ein Blockschema für den Informationsfluss an einer Peripherie einer weiteren Ausführungsform einer erfindungsgemäßen Einrichtung zur Überwachung und Systemsteuerung und
Fig. 4: ein Blockschema für den Informationsfluss an einer Peripherie einer Ausführungsform einer erfindungsgemäßen Einrichtung zur Überwachung und Systemsteuerung, bei dem die Funktion der Datenbank verdeutlicht wird.

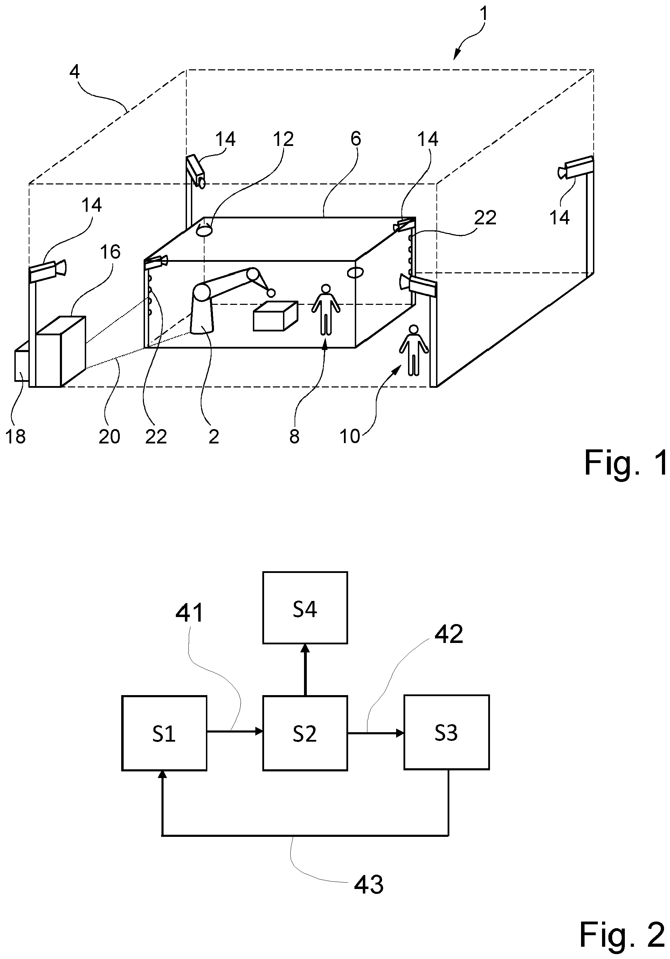

Fig. 1 zeigt schematisch eine perspektivische Ansicht einer Ausführungsform einer erfindungsgemäßen Einrichtung 1 zur Überwachung eines Entscheidungsraums 4 und Steuerung wenigstens einer Arbeitsvorrichtung, hier ausgeführt als Roboter 2. Dadurch wird die Sicherheit in einem Kollaborationsraum 6 hergestellt, ohne dass dieser durch Zäune oder andere mechanische Sicherheitseinrichtungen abgegrenzt sein muss.

Die erfindungsgemäße Einrichtung 1 stellt sicher, dass es im Kollaborationsraum 6 nicht zu Unfällen zwischen Menschen 8, sich dem Kollaborationsraum 6 nähernden Menschen 10 und dem Roboter 2 kommt. Dies wird sichergestellt durch die Verarbeitung von Sensordaten, die die Sensoren 12, 14 bereitstellen. Im vorliegenden Ausführungsbeispiel sind Bewegungssensoren 12, insbesondere aber Kameras 14 eingesetzt.

Die Sensordaten, insbesondere die Bilder der Kameras 14, werden in einer Steuerungseinrichtung 16 verarbeitet. Mittels einer Gesichtserkennung wird dabei auch festgestellt, ob der qualifizierte Mensch 8 sich im Kollaborationsraum 6 befindet, der mit der Arbeit mit dem Roboter 2 vertraut ist, sodass die Sicherheitsanforderungen geringer sind. Nähert sich hingegen der nicht qualifizierte Mensch 10 dem Kollaborationsraum 6, wird dessen Bewegung als Vektor (umfassend Werte wie Geschwindigkeit, Bewegungsrichtung, Größe) in der Steuerungseinrichtung 16 berücksichtigt. Von der Steuerungseinrichtung 16 geht über eine Steuerleitung 20 ein Steuersignal an den Roboter 2 sowie an Signaleinrichtungen 22. Die Signaleinrichtungen 22 warnen die Menschen 8, 10, während der Roboter 2 unter Einfluss der Steuersignale seine Bewegung der Situation anpasst.

Im vorliegenden Ausführungsbeispiel setzt die interne Steuerung des Roboters 2 die über die Steuerleitung 20 zugeführten Signale entsprechend um. Alternativ ist es auch vorgesehen, dass die gesamten Steuersignale für den Roboter 2 aus der Steuerungseinrichtung 16 stammen und bereits dort der Situation entsprechend geänderte Steuersignale ausgegeben werden. Im Ergebnis kann der Roboter 2 die Geschwindigkeit seiner Bewegungen anpassen, den Bewegungsablauf ändern oder beispielsweise bei noch stärkerer Annäherung des nicht qualifizierten Menschen 10 etwa einen Werkzeugkopf mit Gefährdungspotenzial in eine sichere Position oder in einen Schutzbereich zu fahren. Gleichfalls kann bei einer unmittelbar bevorstehenden Kollision, die auch gegen einen stehenden Roboterarm oder ein stehendes Werkzeug ein Gefahrenpotenzial darstellen kann, der entsprechende Bereich in Bewegungsrichtung des Menschen 8, 10 zurückgefahren und damit die Kollision gedämpft werden.

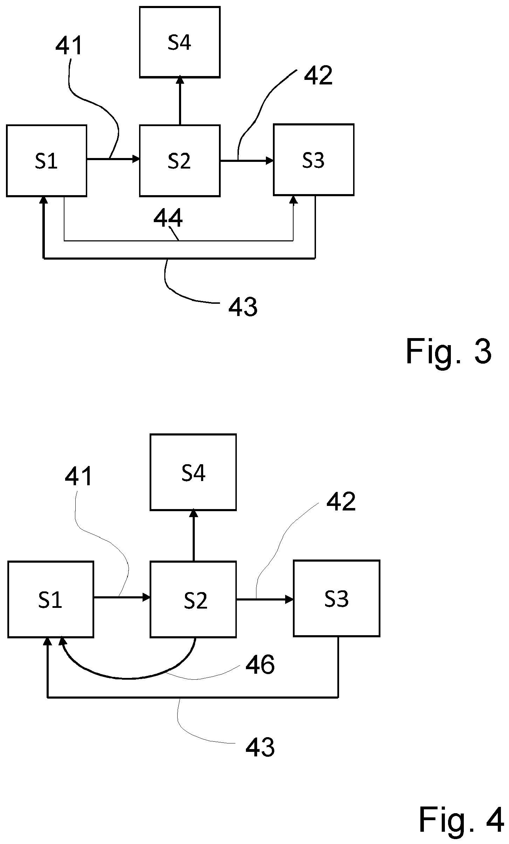

Mittels einer bidirektional arbeitenden Ausgabeeinrichtung 18, die nicht nur der Ausgabe der Steueranweisungen dient und ebenfalls mit der Steuerungseinrichtung 16 verbunden ist, können Berichte, Anweisungen und Dokumentationen für die Bediener oder zur Erfüllung gesetzlicher Vorgaben ausgegeben werden. Die Ausgabeeinrichtung 18 kann auch als bidirektionale Maschinenschnittstelle ausgeführt sein, so dass Änderungen in der Steuerung dort eingegeben werden können. Zur Eingabe von Daten vergleiche auch Figuren 2 bis 4, insbesondere Fig. 3.

Fig. 2 zeigt ein Blockschema für den Informationsfluss an einer Peripherie einer Ausführungsform einer erfindungsgemäßen Einrichtung zur Überwachung und Systemsteuerung, die Übertragung der benötigten Daten und die Einbindung der erfindungsgemäßen Einrichtung in die Peripherie, die einen digitalen Zwilling S1, eine Sicherheitsbeurteilung S2, eine Schnittstelle zur Hardware S3, die beispielsweise der in Fig. 1 dargestellten Ausführungsform der erfindungsgemäßen Einrichtung zur Überwachung und Systemsteuerung entspricht und das Arbeitssystem mit den einzelnen Arbeitsvorrichtungen 2, Signaleinrichtungen 22 oder Sensoranordnungen 12, 14 umfasst. Es ist weiterhin eine Dokumentausgabe S4 vorgesehen. Die Sicherheitsbeurteilung S2 umfasst Methoden bzw. Verfahren der Beurteilung der Sicherheit, wie Risikobeurteilung, Gefährdungsbeurteilung oder HAZOP, die nach der Erfindung zudem KI-gestützt erfolgen. Die Dokumentausgabe S4 umfasst alle statischen, unveränderlichen Daten, wie z. B. gedruckte Dokumente, die ebenfalls die Sicherheit des Arbeitssystems oder einzelner Arbeitsvorrichtungen, Signaleinrichtungen oder Sensoranordnungen betreffen.

Der digitale Zwilling S1 liefert mit der Ausgabe 41 erforderliche Daten an die KIgestützte Sicherheitsbeurteilung S2. Hierfür erhält er relevante, wesentliche Meldungen und Informationen, die eine geänderte Sicherheitsbeurteilung S2 zur Folge hat, die zudem nicht mit den aktuell geltenden Maßnahmen abgedeckt werden kann. Hierzu gehören z. B. eine Änderung an der Signaleinrichtung 22 oder eine neue Arbeitsvorrichtung 2. Die Meldungen können aus dem realen Betrieb des Arbeitssystems heraus erfolgen, insbesondere über die Ausgabe 43 von Informationen über Änderungen an den dort, vor allem im Entscheidungsraum 4 eingesetzten Arbeitsvorrichtungen 2 (vgl. Fig. 1). Auf dieser Grundlage erfolgt die Ausgabe von Daten aus der KI zur Sicherheitsbeurteilung S2 über die Ausgabe 42 an die Schnittstelle zur Hardware S3, beispielsweise die Ausgabeeinrichtung 18 gemäß Fig. 1, wodurch die erforderlichen Reaktionen und Anpassungen bei dem Arbeitssystem erfolgen. Die Dokumentausgabe S4 erzeugt Dokumente für den Hersteller und/oder Betreiber als ein Ergebnis der KI-gestützten Sicherheitsbeurteilung S2.

Fig. 3 zeigt ein weiteres Blockschema für den Informationsfluss an einer Peripherie einer Ausführungsform einer erfindungsgemäßen Einrichtung zur Überwachung und Systemsteuerung, wie sie bereits in der Beschreibung zu Fig. 2 erläutert wurde. Darüber hinaus erfolgt jedoch eine Ausgabe 44 von Echtzeitdaten aus dem digitalen Zwilling S1 direkt an die Hardware S3. Diese Echtzeitdaten ermöglichen eine echtzeitfähige Regelung, Steuerung und Simulation der Prozesse im Arbeitssystem.

Fig. 4 zeigt ein weiteres Blockschema für den Informationsfluss an einer Peripherie einer Ausführungsform einer erfindungsgemäßen Einrichtung zur Überwachung und Systemsteuerung, wie sie bereits in der Beschreibung zu den Figuren 2 und 3 erläutert wurde und bei der die Funktion der Datenbank als Teil der Sicherheitsbeurteilung S2 verdeutlicht wird. Die Datenbank ist eine übergeordnete Sammlung von relevanten Betriebsfällen aller vergleichbaren Arbeitssysteme. Auf die Datenbank greift die Sicherheitsbeurteilung S2 aller Arbeitssysteme zu, um in einem Anlernprozess den zu treffenden Entscheidungen umfangreiche Erfahrungsdaten zugrunde legen zu können.

Weiterhin greift der digitale Zwilling S1 auf die Datenbank zu, um mittels der Abgabe 46 aktualisierter relevanter Betriebsdaten den digitalen Zwilling S1 auf einem aktuellen Stand der Erfahrungen zu erhalten. Auf Grundlage des stets aktuellen digitalen Zwillings S1 erfolgt die Entscheidung der Sicherheitsbeurteilung S2.

In der Darstellung ist die Datenbank in der Sicherheitsbeurteilung S2 umfasst und Teil dieser geworden. Die Abgabe 46 aktualisierter relevanter Betriebsdaten an den digitalen Zwilling S1 erfolgt daher von der Sicherheitsbeurteilung S2 aus.

### Bezugszeichenliste

- 1: Einrichtung zur Überwachung und Steuerung
- 2: Arbeitsvorrichtung, Roboter
- 4: Entscheidungsraum
- 6: Kollaborationsraum
- 8: Mensch (qualifiziert)
- 10: Mensch (nicht qualifiziert)
- 12: Bewegungssensor, Sensoranordnung
- 14: Kamera, Sensoranordnung
- 16: Steuerungseinrichtung
- 18: Ausgabeeinrichtung
- 20: Steuerleitung
- 22: Signaleinrichtung
- 41: Ausgabe von Daten aus digitalem Zwilling
- 42: Ausgabe von Daten aus Sicherheitsbeurteilung
- 43: Ausgabe von Informationen über Änderungen an Arbeitsvorrichtung
- 44: Ausgabe von Echtzeitdaten aus digitalem Zwilling
- 46: Abgabe aktualisierter relevanter Betriebsdaten
- S1: digitaler Zwilling
- S2: Sicherheitsbeurteilung
- S3: Hardware
- S4: Dokumentausgabe

## Patentansprüche

1. Einrichtung (1) zur Überwachung und Steuerung eines automatisiert arbeitenden technischen Arbeitssystems, das mit Menschen (8, 10) zusammenarbeitet, das Arbeitssystem ausgebildet als ein wenigstens eine Arbeitsvorrichtung (2) und/oder wenigstens eine Signaleinrichtung (22) umfassender dreidimensionaler Entscheidungsraum (4), der einen Kollaborationsraum (6) umfasst, in dem das durch eine Steuerungseinrichtung (16) gesteuerte Arbeitssystem arbeitet, wobei eine Sensoranordnung (12, 14) vorgesehen ist, die den Entscheidungsraum (4) überwacht und dabei Sensordaten gewinnt, **dadurch gekennzeichnet, dass** die Steuerungseinrichtung (16) ein KI-System umfasst, wobei die Sensordaten an die Steuerungseinrichtung (16) übertragen und dort durch das KI-System gemeinsam mit einem digitalen Zwilling des technischen Arbeitssystems verarbeitet und verknüpft werden, wobei der digitale Zwilling an eine Datenbank angebunden ist, in der aus einer Vielzahl vergleichbarer technischer Arbeitssysteme gewonnene, für eine automatisierte Entscheidungsfindung relevante Informationen abgelegt sind, und wobei aus der Steuerungseinrichtung (16) Aktordaten ausgegeben und an die wenigstens eine Arbeitsvorrichtung (2) und/oder die wenigstens eine Signaleinrichtung (22) übertragen und in Aktionen umgesetzt werden, wobei weiterhin durch das KI-System Sensordaten und/oder Aktordaten, die für die automatisierte Entscheidungsfindung in den vergleichbaren technischen Arbeitssystemen relevant sind, selektiert, an die Datenbank übertragen und dort abgelegt werden.

2. Einrichtung nach Anspruch 1, wobei die Sensoranordnung (12, 14) zumindest teilweise selbstüberwachend ausgeführt ist.

3. Einrichtung nach Anspruch 1 oder 2, wobei die wenigstens eine Signaleinrichtung (22) als ein optisches Signalgerät zum Warnen eines Menschen (8, 10) an der Arbeitsvorrichtung (2) ausgeführt ist, das eine aktive Änderung der Lichtabgabe im Bereich der Arbeitsvorrichtung (2) in Abhängigkeit von der Position, der Bewegungsrichtung und/oder der Geschwindigkeit des Menschen (8, 10) ausführt, wobei die Änderung der Lichtabgabe weiterhin in Abhängigkeit vom Zustand und/oder der aktuellen Betriebsart der Arbeitsvorrichtung (2) erfolgt.

4. Einrichtung nach Anspruch 3, wobei das optische Signalgerät ein zwei- oder dreidimensional berührungslos wirkendes Messsystem als Sensoranordnung (12, 14) umfasst, das die Position, Richtung und Geschwindigkeit des Menschen (8, 10) erfasst.

5. Einrichtung nach Anspruch 3 oder 4, wobei die Änderung der Lichtabgabe des optischen Signalgeräts eine RGB-Farbwahl, Dimmen, Ausblenden von Bestandteilen einer matrixartigen Anordnung von Leuchtelementen, aktorische Nahführung und/oder Fokussierung eines Lichtstrahles im sichtbaren Lichtspektrum umfasst.

6. Verfahren zur Überwachung und Steuerung eines automatisiert arbeitenden technischen Arbeitssystems, das mit Menschen (8, 10) zusammenarbeitet, das Arbeitssystem ausgebildet als ein wenigstens eine Arbeitsvorrichtung (2) und/oder wenigstens eine Signaleinrichtung (22) umfassender dreidimensionaler Entscheidungsraum (4), der einen Kollaborationsraum (6) umfasst, in dem eine Steuerungseinrichtung (16) das technische Arbeitssystem (2) steuert, wobei eine Sensoranordnung (12, 14) den Entscheidungsraum (4) überwacht und daraus Sensordaten gewinnt, **dadurch gekennzeichnet, dass** die Steuerungseinrichtung (16) ein KI-System umfasst, wobei die Sensordaten an die Steuerungseinrichtung (16) übertragen und dort durch das KI-System gemeinsam mit einem digitalen Zwilling des Arbeitssystems verarbeitet und verknüpft werden, wobei der digitale Zwilling an eine Datenbank angebunden ist, in der aus einer Vielzahl vergleichbarer Arbeitssysteme gewonnene, für eine automatisierte Entscheidungsfindung relevante Informationen abgelegt werden, und wobei aus der Steuerungseinrichtung (16) Aktordaten ausgegeben und an die wenigstens eine Arbeitsvorrichtung (2) und/oder die wenigstens eine Signaleinrichtung (22) übertragen und in Aktionen umgesetzt werden, wobei weiterhin durch das KI-System Sensordaten und/oder Aktordaten, die für die automatisierte Entscheidungsfindung in den vergleichbaren Arbeitssystemen relevant sind, selektiert, an die Datenbank übertragen und dort abgelegt werden.

7. Verfahren nach Anspruch 6, wobei Menschen (8, 10) innerhalb und bei der Annäherung an den Entscheidungsraum (4) erkannt und permanent in ihren Bewegungen überwacht werden, wobei ihr Verhalten bezüglich möglicher Gefährdungen mittels des KI-Systems ausgewertet wird.

8. Verfahren nach einem der Ansprüche 6 oder 7, wobei die Erfassung und Auswertung der Bewegungen als Punktwolke, dreidimensionales Kamerabild, Ortsinformation oder Vektorinformation, bereitgestellt von der Sensoranordnung (14, 16), erfolgt.

9. Verfahren nach einem der Ansprüche 6 bis 8, wobei eine Echtzeitwirkung entfaltet wird, indem das KI-System eine erforderliche Reaktionszeit definiert oder der Datenbank entnimmt und in die automatisierte Entscheidungsfindung einfließen lässt.

10. Verfahren nach einem der Ansprüche 6 bis 9, wobei die durch die wenigstens eine Arbeitsvorrichtung (2) umgesetzten Aktionen eine proaktive, vorausschauende und optimierte Beeinflussung der jeweiligen Situation im Entscheidungsraum (4) umfassen.

11. Verfahren nach Anspruch 10, wobei die Aktionen darin bestehen, dass die wenigstens eine Arbeitsvorrichtung (2) mit beweglichem Arbeitsorgan ihre geplante Bewegung nicht startet, eine vorhandene Geschwindigkeit verringert, eine Ausweichbewegung veranlasst, eine abweisende oder sonstig wirksame, zusätzliche stoßreduzierende Schutzeinrichtung auslöst und/oder einen Sicherheitsstopp veranlasst, und/oder wobei die Sensoranordnung (12, 14) des Entscheidungsraums (4) die Überwachung der geplanten Bewegungsbahn der Arbeitsvorrichtung (2) übernimmt und sicherheitsgerichtet reagiert, wenn die Arbeitsvorrichtung (2) eine mit der vorgesehenen Toleranz geplanten Bahn nicht einhält, und/oder wobei eine Signaleinrichtung (22) eingeschaltet wird.

12. Verfahren nach einem der Ansprüche 6 bis 11, wobei die Sensordaten eine Erkennung eines im Entscheidungsraum (4) anwesenden oder sich diesem nähernden Menschen (8, 10) umfasst, wobei mittels eines Abgleichs mit der in der Datenbank hinterlegten Qualifikation eine Differenzierung der zulässigen Gefährdungen des Menschen (8, 10) in Abhängigkeit von deren Berechtigungen erfolgt und diese Differenzierung ebenfalls durch das KI-System verarbeitet und verknüpft wird.

13. Verfahren nach einem der Ansprüche 6 bis 12, wobei Informationen zu einzelnen Systemelementen des technischen Arbeitssystems funktionellen oder konstruktiven Bausteinen zugeordnet erfasst werden.

14. Verfahren nach einem der Ansprüche 6 bis 13, wobei bei einem Ersatz der Arbeitsvorrichtung (2) und/oder der Signaleinrichtung (22) oder beim Hinzufügen einer weiteren Arbeitsvorrichtung (2), einer weiteren Signaleinrichtung (22) und/oder einer weiteren Sensoranordnung (12, 14) diese automatisch in das technischen Arbeitssystem integriert werden, die alten Eigenschaftsdaten durch die neuen ersetzt werden und neue Verknüpfungen mit dem mit einem digitalen Zwilling erzeugt werden.

15. Verfahren nach einem der Ansprüche 6 bis 14, wobei ein statisches Sicherheitskonzept erstellt wird.
